# EUROPÄISCHE PATENTANMELDUNG

(11) **EP 4 538 696 A1**
(43) Veröffentlichungstag der Anmeldung: **16.04.2025**
(21) Anmeldenummer: 23202308.5
(22) Anmeldetag: 09.10.2023
(51) Int. Cl.: G01N 30/38, G01N 30/86, G01N 30/88, G01N 30/02

(54) **HERSTELLUNGSVERFAHREN FÜR EINE GASANALYSEVORRICHTUNG, COMPUTERPROGRAMMPRODUKT, GASANYLSEVORRICHTUNG, SIMULATIONSVERFAHREN UND SIMULATIONSPROGRAMMPRODUKT**

(71) Anmelder: Siemens Aktiengesellschaft, 80333 München (DE)
(72) Erfinder: Hangauer, Andreas, 80634 München (DE); Strauch, Piotr, 76761 Rülzheim (DE)
(74) Vertreter: Siemens Patent Attorneys

(57) **Zusammenfassung**

Die Erfindung betrifft ein Verfahren (100) zum Herstellen einer Gasanalysevorrichtung (10), die zumindest eine Trennvorrichtung (12) und eine Mehrzahl an Pneumatikmodulen (20) aufweist. Das Verfahren (100) umfasst einen ersten Schritt (110), in dem zumindest ein Zielparameter (62) für die herzustellende Gasanalysevorrichtung (10) vorgegeben wird und eine Mehrzahl an Basis-Pneumatik-Aufbauten (35) bereitgestellt wird. In einem zweiten Schritt (120) erfolgt ein Bereitstellen einer Mehrzahl an kontinuierlichen und diskreten Parametern (42, 44) der Basis-Pneumatik-Aufbauten (35). Es werden Grundkonfigurationen (50) anhand der Basis-Pneumatik-Aufbauten (35) erzeugt, die unter Variieren (55) der diskreten Parameter (42) ermittelt werden. Im dritten Schritt (130) des Verfahren (100) erfolgt ein Ermitteln von Kandidaten-Pneumatik-Aufbauten (60) anhand je einer Grundkonfiguration (50), wobei jeweils zumindest ein kontinuierlicher Parameter (44) der Grundkonfiguration (50) mittels eines Optimierungsalgorithmus (72) variiert wird. Ferner wird im vierten Schritt (140) ein Kandidaten-Pneumatik-Aufbaus (60) anhand eines Sollwerts (64) des Zielparameters (62) ausgewählt und an einen Benutzer und/oder eine Datenschnittstelle ausgegeben. Weiter wird die Gasanalysevorrichtung (10) anhand des ausgewählten Kandidaten-Pneumatik-Aufbaus (66) hergestellt. Die Erfindung betrifft ebenso ein korrespondierendes Computerprogrammprodukt (70) eine Gasanalysevorrichtung (10), ein Simulationsverfahren (200) und ein Simulationsprogrammprodukt (80) .

## Beschreibung

Die Erfindung betrifft ein Verfahren zum Herstellen einer Gasanalysevorrichtung und ein Computerprogrammprodukt, das dazu ausgebildet ist, das Verfahren durchzuführen. Ebenso betrifft die Erfindung eine entsprechende Gasanalysevorrichtung. Ferner betrifft die Erfindung ein Simulationsverfahren für eine derartige Gasanalysevorrichtung und ein korrespondierendes Simulationsprogrammprodukt.

Die Patentschrift EP 2 828 653 B2 offenbart eine Simulation eines chromatographischen Durchlaufs an einem Chromatographen. Der chromatographische Durchlauf verwendet eine mobile Phase, die ein Gemisch aus zumindest zwei Eluensbestandteilen mit unterschiedlichen chromatographischen Eigenschaften umfasst.

Gasanalysevorrichtungen werden in einer Vielzahl an Anwendungen eingesetzt, für die eine individuelle Anpassung für eine bedarfsgerechte Auslegung erforderlich ist. Aufgrund der physikalischen und chemischen Komplexität von Gasanalysevorrichtungen ist eine entsprechende Anpassung aufwendig, zeitintensiv und fehleranfällig. Gleichermaßen wird eine kosteneffiziente Konstruktion von Gasanalysevorrichtungen angestrebt. Es besteht Bedarf daran, die Herstellung von Gasanalysevorrichtungen, insbesondere von anwendungsspezifisch angepassten Gasanalysevorrichtungen, zu beschleunigen und zu vereinfachen. Der Erfindung liegt die Aufgabenstellung zugrunde, eine Möglichkeit bereitzustellen, die in zumindest einem der skizzierten Aspekte eine Verbesserung bietet.

Die Aufgabenstellung wird durch ein erfindungsgemäßes Verfahren zum Herstellen einer Gasanalysevorrichtung gelöst. Die herzustellende Gasanalysevorrichtung weist zumindest eine Trennvorrichtung und eine Mehrzahl an Pneumatikmodulen auf. Die Trennvorrichtung kann beispielsweise eine Trennsäule sein, die durch ihre Füllung und/oder Innenbeschichtung dazu geeignet ist, eine Stoffprobe bei einem Durchströmen in ihre Komponenten aufzutrennen. Die Pneumatikmodule können beispielsweise als Druckregulatoren, Ventile, Drosseln, Detektoren und/oder Leitungen ausgebildet sein. Die Pneumatikmodule können sich in ihrer physischen Bauart unterscheiden und/oder durch die darin eingesetzten Regelalgorithmen.

Das Verfahren umfasst einen ersten Schritt, in dem zumindest ein Zielparameter für die herzustellende Gasanalysevorrichtung vorgegeben wird, beispielsweise durch einen Benutzer. Der Zielparameter kann eine technische Größe der Gasanalysevorrichtung sein, beispielsweise ein Trennleistungsparameter der Trennvorrichtung oder eine Maximaldauer für die Konzentrationsanalyse einer vorgebbaren Stoffprobe. Alternativ oder ergänzend kann der Zielparameter auch eine nichttechnische Größe sein, beispielsweise ein Energiebedarf, ein CO₂-Abdruck oder Herstellungskosten. Weiter wird im ersten Schritt eine Mehrzahl an Basis-Pneumatik-Aufbauten bereitgestellt, die jeweils virtuelle Repräsentanzen der Trennvorrichtung und der Pneumatikmodule umfassen. Die Basis-Pneumatik-Aufbauten können dazu beispielsweise in einer Datenbank gespeichert sein und durch den Benutzer und/oder eine Künstliche Intelligenz ausgewählt werden. Die Basis-Pneumatik-Aufbauten sind als pneumatisches Pendant zu einem Schaltplan aufzufassen und geben jeweils einen möglichen Aufbau einer herstellbaren Gasanalysevorrichtung an. Die Basis-Pneumatik-Aufbauten selbst sind somit virtuelle Repräsentanzen von herstellbaren Gasanalysevorrichtungen. Die Basis-Pneumatik-Aufbauten stellen eine Ausgangsbasis für die weiteren Verfahrensschritte dar. Darüber hinaus umfasst das beanspruchte Verfahren einen zweiten Schritt, in dem eine Mehrzahl an kontinuierlichen und diskreten Parametern der Basis-Pneumatik-Aufbauten bereitgestellt werden. Dazu werden in den Basis-Pneumatik-Aufbauten die kontinuierlichen und diskreten Parameter als entsprechende Parametertypen identifiziert und eine Zusammenstellung, die diese umfasst, in maschinenlesbarer Form bereitgestellt. Ein kontinuierlicher Parameter kann innerhalb eines Wertespektrums im Wesentlichen jeglichen numerisch möglichen Wert annehmen. Beispielsweise ist eine Länge einer Leitung oder eine Temperatur einer Stoffprobe kontinuierliche Parameter. Ebenso sind Koeffizienten, die einen Regelalgorithmus eines Pneumatikmoduls einstellen, kontinuierliche Parameter. Ein diskreter Parameter kann lediglich eine begrenzte Anzahl an vorgegebenen Werten annehmen. Ein diskreter Parameter ist beispielsweise eine Angabe über ein verwendetes Material, das aus einer Liste an möglichen Materialien ausgewählt ist, oder eine Angabe über einen Bautyp des verwendeten Detektors, der aus einer Liste von möglichen Bautypen ausgewählt ist. Die bereitgestellten kontinuierlichen und diskreten Parameter sind somit in ihrer Kategorisierung als diskret oder kontinuierlich durch den zweiten Schritt voneinander unterscheidbar.

Darüber hinaus gehört zum zweiten Schritt, dass ausgehend von den Basis-Pneumatik-Aufbauten eine Mehrzahl an Grundkonfigurationen ermittelt wird. Die Grundkonfigurationen werden ermittelt, in dem in den Basis-Pneumatik-Aufbauten die diskreten Parameter variiert werden. Folglich wird zu je einem Basis-Pneumatik-Aufbau durch Variieren, insbesondere systematisches Variieren, der diskreten Parameter eine Mehrzahl an Grundkonfigurationen ermittelt. Die ermittelten Grundkonfigurationen werden zur weiteren Verarbeitung zumindest vorübergehend gespeichert. Die Grundkonfigurationen entsprechen somit Basis-Pneumatik-Aufbauten, die bezogen auf die diskreten Parameter konkretisiert sind. In Hinblick auf die kontinuierlichen Parameter bleiben die Grundkonfigurationen im zweiten Schritt unbestimmt. Der zweite Schritt kann selbsttätig, also frei von Eingaben durch den Benutzer, durchgeführt werden.

Ferner umfasst das Verfahren einen dritten Schritt, in dem ausgehend von den Grundkonfigurationen aus dem zweiten Schritt Kandidaten-Pneumatik-Aufbauten ermittelt werden. Je einer Grundkonfiguration wird jeweils eine Mehrzahl an Kandidaten-Pneumatik-Aufbauten ermittelt. Die Kandidaten-Pneumatik-Aufbauten werden unter Variieren der kontinuierlichen Parameter aus den Grundkonfigurationen ermittelt. Die Kandidaten-Pneumatik-Aufbauten sind somit gegenüber den Grundkonfigurationen auch im Hinblick auf die kontinuierlichen Parameter konkretisiert. Das Variieren der kontinuierlichen Parameter erfolgt hierbei mittels eines Optimierungsalgorithmus. Die ermittelten Kandidaten-Pneumatik-Aufbauten sind als Beschreibungen von Gasanalysevorrichtungen aufzufassen, die soweit konkretisiert sind, dass sie ohne weitere Eingaben durch einen Benutzer im Wesentlichen prinzipiell herstellbar sind. Auch der dritte Schritt kann selbsttätig, also frei von Eingaben durch den Benutzer, durchgeführt werden.

Das erfindungsgemäße Verfahren umfasst weiter einen vierten Schritt, in dem einer der Kandidaten-Pneumatik-Aufbauten ausgewählt wird. Dazu wird der Zielparameter für den jeweiligen Kandidaten-Pneumatik-Aufbau ermittelt. Dies erfolgt beispielsweise durch ein Simulieren des Kandidaten-Pneumatik-Aufbaus und dessen Betriebsverhaltens. Das Auswählen erfolgt anhand eines Sollwerts, der für den Zielparameter vorgegeben ist. Der Sollwert kann beispielsweise durch den Benutzer, eine Tabelle oder einen Algorithmus fest vorgegeben sein, oder dynamisch sein. Ein dynamischer Sollwert kann beispielsweise darin bestehen, den Kandidaten-Pneumatik-Aufbau zu ermitteln, bei dem der Zielparameter einen Maximalwert oder einem Minimalwert entspricht. Der im vierten Schritt ausgewählte Kandidaten-Pneumatik-Aufbau entspricht bezogen auf den Zielparameter dem Sollwert und wird selbsttätig ermittelt. Weiter wird der ausgewählte Kandidaten-Pneumatik-Aufbau an den Benutzer und/oder eine Datenschnittstelle ausgegeben.

Des Weiteren wird im erfindungsgemäßen Verfahren die Gasanalysevorrichtung basierend auf dem im vierten Schritt ausgewählten Kandidaten-Pneumatik-Aufbau hergestellt. Dazu kann zumindest ein Steuerbefehl an eine Fertigungsvorrichtung, beispielsweise einen Montageroboter oder ein autonomes Flurförderfahrzeug, ausgegeben werden. Alternativ oder ergänzend kann im vierten Schritt eine Parametrierung ermittelt werden, die zum ausgewählten Kandidaten-Pneumatik-Aufbau gehört, und an die entsprechende Komponente der Gasanalysevorrichtung, insbesondere an zumindest ein entsprechendes Pneumatikmodul, übertragen werden. Die Parametrierung kann beispielsweise Koeffizienten umfassen, durch die ein Regelalgorithmus des entsprechenden Pneumatikmoduls einstellbar ist. Weiter alternativ oder ergänzend kann eine Stückliste zur Herstellung der Gasanalysevorrichtung anhand des ausgewählten Kandidaten-Pneumatik-Aufbaus erzeugt und ausgegeben werden.

Das erfindungsgemäße Verfahren beruht unter anderem auf der überraschenden Erkenntnis, dass durch die Reihenfolge, in der die diskreten und kontinuierlichen Parameter eines Basis-Pneumatik-Aufbaus bzw. einer Grundkonfiguration variiert werden, eine erhebliche Reduzierung des notwendigen Rechenaufwands erzielbar ist. Dadurch, dass die diskreten Parameter von Gasanalysevorrichtungen nur eine relativ geringe Anzahl an Werten annehmen, entsteht mit dem erfindungsgemäßen Verfahren eine relativ geringe Anzahl an Grundkonfigurationen. Dadurch ist die Anzahl an Optimierungsdurchgängen, die durch Variieren der kontinuierlichen Parameter vorzunehmen sind, ebenso reduziert. Durch geeignete Optimierungsalgorithmen sind diese Optimierungsdurchgänge ebenso schnell und datenökonomisch durchführbar. Ferner existieren Optimierungsalgorithmen, die im dritten Schritt einsetzbar sind, mit Abbruchroutinen. Durch eine solche Abbruchroutine ist selbsttätig frühzeitig erkennbar, dass auch durch weiteres Variieren der kontinuierlichen Parameter kein anforderungsgemäßer Kandidaten-Pneumatik-Aufbau zu erwarten ist. Dementsprechend ist ein weiteres Variieren der kontinuierlichen Parameter für eine Grundkonfiguration frühzeitig abbrechbar, wodurch Rechenaufwand eingespart wird. Das erfindungsgemäße Verfahren erlaubt es somit, eine theoretisch große, de facto unübersehbare, Menge an möglichen Kandidaten-Pneumatik-Aufbauten selbsttätig auf eine handbare Menge an Kandidaten-Pneumatik-Aufbauten zu reduzieren und auszuwerten. Dadurch sind insgesamt Gasanalysevorrichtungen schnell herstellbar, die in besonderer Weise für einen angestrebten Einsatzzweck angepasst sind und gleichzeitig kosteneffizient sind. Dadurch, dass das erfindungsgemäße Verfahren mit einem Minimum an Eingaben durch den Benutzer auskommt, weist es eine verringerte Fehleranfälligkeit auf. Die Herstellung von Gasanalysevorrichtungen wird so insgesamt effizienter gestaltet.

In einer Ausführungsform des beanspruchten Verfahrens wird eine virtuelle Repräsentanz der Stoffprobe in der Trennvorrichtung zumindest im dritten Schritt in einer Sliding-Window-Simulation nachgestellt. Durch das Nachstellen in der Sliding-Window-Simulation wird beispielsweise der Zielparameter für den jeweiligen Kandidaten-Pneumatik-Aufbau ermittelt. Die Stoffprobe, also deren virtuelle Repräsentanz, umfasst zumindest zwei Stoffkomponenten, die durch die Trennvorrichtung unterschiedlich starken Retentionswirkungen unterworfen sind. Je Stoffkomponente wird die durch die Trennvorrichtung ausgeübte Retentionswirkung in einem separaten Simulationsfenster nachgestellt, das der jeweiligen Stoffkomponente beim Durchströmen der Trennvorrichtung folgt. Die Sliding-Window-Simulation kann beispielsweise basierend auf einem Crank-Nicholson-Verfahren durchgeführt werden. Die Erfindung beruht unter anderem auch auf der überraschenden Erkenntnis, dass eine Sliding-Window-Simulation ein besonders schnelles und gleichzeitig präzises Nachstellen einer Durchströmung einer Trennvorrichtung mit einer Stoffprobe erlaubt. Dadurch, dass die Sliding-Window-Simulation eine derart hohe Geschwindigkeit bietet, wird das Variieren von kontinuierlichen Parametern für die Trennvorrichtung in puncto Rechenleistungsbedarf, und damit Zeitbedarf, praktikabel. Insbesondere ist eine Feinabstimmung der Trennvorrichtung durch das Variieren der kontinuierlichen Parameter möglich. Das beanspruchte Verfahren erlaubt es so, verfügbare Rechenleistung gezielt auf eine rechenintensive Optimierung zu lenken, die jedoch erfolgsversprechend ist. Die technischen Vorzüge des zugrundeliegenden Verfahrens werden so weiter gesteigert. Alternativ oder ergänzend kann der dritte Schritt durch ein Ersatzmodell durchgeführt werden, das als Künstliche Intelligenz ausgebildet ist. Das Ersatzmodell ist dazu ausgebildet, ein Verhalten einer Simulation, insbesondere einer Sliding-Window-Simulation, in ihrer Wirkungsweise nachzustellen. Das Ersatzmodell stellt damit keine bauliche Nachahmung des entsprechenden Kandidaten-Pneumatik-Aufbaus dar.

Darüber hinaus können die diskreten Parameter eine Typenangabe für einen Detektor, eine Materialangabe für ein Trennmaterial und/oder eine Typenangabe für einen Injektor umfassen. Diese diskreten Parameter können lediglich eine relative geringe Anzahl an Werten annehmen, also Informationen enthalten, und definieren bereits relativ präzise die Fähigkeiten, die eine Gasanalysevorrichtung mit einer entsprechenden Grundkonfiguration aufweist. Demzufolge ist bereits mit einer geringen Anzahl an diskreten Parametern ermittelbar, ob basierend auf einer Grundkonfiguration der Zielparameter seinen Sollwert überhaupt erreichen kann. Insbesondere kann der zweite Schritt eine derartige Ermittlung umfassen. Wird eine Grundkonfiguration erkannt, die dafür ungeeignet ist, dass der Zielparameter seinen Sollwert erreicht, wird sie vom weiteren Verfahren ausgeschlossen, also im dritten Schritt ignoriert. Alternativ kann eine ungeeignete Grundkonfiguration im dritten Schritt durch den Optimierungsalgorithmus schnell als ungeeignet erkannt werden. Dies gilt insbesondere für die Detektor-Typenangabe in Verbindung mit einer Angabe über die zu analysierende Stoffprobe und für die Trennmaterial-Angabe in Verbindung mit der Angabe über die zu analysierende Stoffprobe.

Ein einer weiteren Ausführungsform des beanspruchten Verfahrens können die kontinuierlichen Parameter eine Temperatur der Stoffprobe, einen Förderdruck, eine Leitungslänge der Trennvorrichtung, einen Trennvorrichtungsdurchmesser und/oder ein Einschnürungsverhältnis einer Drossel umfassen. Diese Parameter sind beim Ermitteln des Zielparameters im Wesentlichen mit beliebiger Genauigkeit einstellbar. Konstruktionsbezogene kontinuierliche Parameter, also solche beim Herstellen der Gasanalysevorrichtung eine Bemaßung einer Komponente definieren, sind an der herzustellenden Gasanalysevorrichtung mit hoher Präzision fertigbar. Beispielsweise ist eine Leitungslänge der Trennvorrichtung, also die Strecke, die eine Stoffprobe in der Trennvorrichtung im Betrieb durchströmt, besonders genau in der Fertigung einstellbar. Mit dem beanspruchten Verfahren wird somit die im Zuge einer Simulation, insbesondere einer Sliding-Window-Simulation, erzielbare Präzision in eine präzise, und damit bedarfsgerechte, Bemaßung von Komponenten der Gasanalysevorrichtung übertragbar. Das technische Potential in der Herstellung der Komponenten der Gasanalysevorrichtung wird somit stärker ausgenutzt.

Ferner kann im beanspruchten Verfahren der zumindest eine Zielparameter auf zumindest eine Stoffprobe bezogen sein. Dabei handelt es sich um eine Stoffprobe, die eine vorgegebene Zusammensetzung aufweist, die mit der herzustellenden Gasanalysevorrichtung zu analysieren ist. Beispielsweise der Zielparameter kann ein Trennleistungsparameter für eine oder mehrere unterschiedliche Stoffproben sein. Die herzustellende Gasanalysevorrichtung ist mit dem beanspruchten Verfahren für den Betrieb mit einer einzigen Stoffprobe oder mehreren unterschiedlichen Stoffproben auslegbar und/oder optimierbar. Infolgedessen ist mittels des beanspruchten Verfahrens eine Gasanalysevorrichtung schnell herstellbar, die auf eine vorgebbare Gruppe an Stoffproben bedarfsgerecht einstellbar ist. Beispielsweise ist so eine Gasanalysevorrichtung herstellbar, die auf die Analyse von unterschiedlichen Erdgasgemischen oder Erdgas-Wasserstoff-Gemischen spezialisiert ist. Das beanspruchte Verfahren vereinfacht und beschleunigt somit die Herstellung von anwendungsspezifischen Gasanalysevorrichtungen.

Des Weiteren können im beanspruchten Verfahren der zweite und/oder dritte Schritt unter Berücksichtigung einer vorgebbaren Betriebsbedingung und/oder einer Konstruktionsbedingung durchgeführt werden. Die Konstruktionsbedingung ist hierbei durch den korrespondierenden Basis-Pneumatik-Aufbau oder die korrespondierende Grundkonfiguration vorgegeben, auf dessen Basis der zweite bzw. dritte Schritt durchgeführt werden. Die vorgebbare Betriebsbedingung kann beispielsweise eine maximal zulässige Temperatur der Stoffprobe sein. Die maximal zulässige Temperatur der Stoffprobe kann durch ihre chemische Stabilität definiert sein, also beispielsweise ihrer Entzündungstemperatur oder eine Temperatur, bei der eine anderweitige chemische Umsetzung in der Stoffprobe erfolgt. Insbesondere können der zweite und/oder dritte Schritt für die zugehörige Grundkonfiguration bzw. den zugehörigen Kandidaten-Pneumatik-Aufbau abgebrochen werden, wenn die vorgebbare Betriebsbedingung verletzt wird. Hierdurch wird die weitere rechnerische Auswertung von technisch nicht umsetzbaren Kandidaten-Pneumatik-Aufbauten unterbunden und Rechenkapazität für andere Kandidaten-Pneumatik-Aufbauten freigesetzt. Die Konstruktionsbedingung wiederum kann beispielsweise eine Innenbemaßung eines Gehäuses sein, das für die herzustellende Gasanalysevorrichtung zu verwenden ist. Hierdurch ist der Grad an Gleichteilverwendung in den herzustellenden Gasanalysevorrichtungen steigerbar, was wiederum zu einer erhöhten Kosteneffizienz führt. Korrespondierend zur vorgebbaren Betriebsbedingung, können der zweite und/oder dritte Schritt für solche Grundkonfigurationen bzw. Kandidaten-Pneumatik-Aufbauten abgebrochen werden, die die Konstruktionsbedingung verletzen. Auch hierdurch wird Rechenkapazität eingespart und für erfolgversprechendere Kandidaten-Pneumatik-Aufbauten bereitgestellt.

Im beanspruchten Verfahren kann der Zielparameter ein Trennleistungsparameter der Trennvorrichtung sein. Durch einen Trennleistungsparameter ist eine Güte der Wirkungsweise der Trennvorrichtung quantifizierbar. Der Trennleistungsparameter kann beispielsweise eine Retentionszeit, eine Peakbreite, ein Retentionsfaktor, eine Selektivität und/oder eine Anzahl an theoretischen Trennstufen sein. Die Trennleistung der Trennvorrichtung ist für eine Vielzahl an Stoffproben dahingehend maßgeblich, ob ein bestimmter Detektor, insbesondere ein bestimmter Bautyp eines Detektors, dazu geeignet ist, zwei Komponenten der Stoffprobe hinreichend genau zu unterscheiden und ihre Konzentration hinreichend genau zu ermitteln. Ebenso wird durch den Trennleistungsparameter, der in einem Gut-Zustand der Gasanalysevorrichtung vorliegt, bestimmt, über welche Dauer mit einer hinreichenden Messgenauigkeit zu rechnen ist. Der Trennleistungsparameter gibt folglich an, wie weit eine Degradation der Trennvorrichtung voranschreiten kann, bis sie zu warten ist. Dadurch ist unter anderem eine zu erwartende wartungsfreie Betriebsdauer der Gasanalysevorrichtung quantifizierbar. Trennleistungsparameter erlauben insgesamt eine breite Spanne an betriebsrelevanten Aspekten der Gasanalysevorrichtung aussagekräftig zu prognostizieren. Dadurch erlaubt das beanspruchte Verfahren es, für den angestrebten Einsatzzweck besonders vorteilhafte Gasanalysevorrichtungen schnell und kosteneffizient bereitzustellen.

Darüber hinaus kann im beanspruchten Verfahren der im vierten Schritt ausgewählte Kandidaten-Pneumatik-Aufbau als Grundlage für einen Basis-Pneumatik-Aufbau für eine erneute Durchführung des skizzierten Verfahrens bereitgestellt werden. Dazu wird der Kandidaten-Pneumatik-Aufbau in einer Datenbank gespeichert. Das beanspruchte Verfahren ist dazu geeignet, ausgewählte Kandidaten-Pneumatik-Aufbauten zu einem Trainings-Datensatz hinzuzufügen, mit dem eine Künstliche Intelligenz, beispielsweise ein Neuronales Netz, trainierbar ist. Mittels der Künstlichen Intelligenz können beispielsweise der erste, zweite, dritte und/oder vierte Schritt des Verfahrens durchgeführt werden oder der Optimierungsalgorithmus eingestellt werden. Dadurch ist das beanspruchte Verfahren zu einer selbsttätigen Weiterentwicklung geeignet.

Weiter kann im beanspruchten Verfahren zumindest der dritte Schritt mittels einer Künstlichen Intelligenz durchgeführt werden, die durch unbeaufsichtigtes maschinelles Lernen trainiert ist. Dazu wird das beanspruchte Verfahren in mehreren Durchgängen durchgeführt, so dass eine Mehrzahl an Kandidaten-Pneumatik-Aufbauten ermittelt wird. Die Erfindung basiert unter anderem auf der überraschenden Erkenntnis, dass Kandidaten-Pneumatik-Aufbauten von herzustellenden Gasanalysevorrichtungen in besonderer Weise dazu geeignet sind, eine Künstliche Intelligenz, beispielsweise ein Neuronales Netz, zu nutzen, um die Gasanalysevorrichtungen zu optimieren. Infolgedessen ist mit dem beanspruchten Verfahren ein erhöhter Optimierungsgrad für die Gasanalysevorrichtungen erzielbar.

Die zugrundeliegende Aufgabenstellung wird ebenso durch ein erfindungsgemäßes Computerprogrammprodukt gelöst. Das Computerprogrammprodukt ist zu einem Ermitteln und Auswählen eines Kandidaten-Pneumatik-Aufbaus ausgebildet, anhand dessen eine Gasanalysevorrichtung herstellbar ist. Im Einzelnen ist das Computerprogrammprodukt dazu ausgebildet, aus Basis-Pneumatik-Aufbauten unter Berücksichtigung zumindest eines Zielparameters aus einer Mehrzahl an Basis-Pneumatik-Aufbauten eine Mehrzahl an Kandidaten-Pneumatik-Aufbauten zu ermitteln. Erfindungsgemäß ist das Computerprogrammprodukt dazu ausgebildet, ein Verfahren gemäß zumindest einer der oben skizzierten Ausführungsformen zumindest teilweise umzusetzen. Das Computerprogrammprodukt kann vollständig als Software oder festverdrahtet ausgebildet sein, beispielsweise als Chip, Integrierte Schaltung oder als FPGA. Ebenso kann das Computerprogrammprodukt als eine Kombination hieraus ausgebildet sein. Weiter kann das Computerprogrammprodukt monolithisch ausgebildet sein, also auf einer einzigen Hardwareplattform ausführbar speicherbar sein. Alternativ kann das Computerprogrammprodukt modular ausgebildet sein und eine Mehrzahl an Teilprogrammen umfassen, die über eine kommunikative Datenverbindung zusammenwirken, um die Funktionalität des zugrundeliegenden Verfahrens bereitzustellen. Das modulare Computerprogrammprodukt kann beispielsweise auf einer Computer-Cloud ausgeführt werden.

In einer Ausführungsform des beanspruchten Computerprogrammprodukts kann dieses dazu ausgebildet sein, basierend auf dem ausgewählten Kandidaten-Pneumatik-Aufbau einen Steuerbefehl für zumindest eine Fertigungsvorrichtung auszugeben, mit der die Gasanalysevorrichtung hergestellt wird, beispielsweise einen Roboter oder eine Werkzeugmaschine. Das Computerprogrammprodukt kann hierzu über zumindest eine Datenschnittstelle verfügen, die mit der Fertigungsvorrichtung kommunikationsfähig ist. Ebenso kann das Computerprogrammprodukt einen Algorithmus umfassen, der eine Komponente der herzustellenden Gasanalysevorrichtung im Kandidaten-Pneuamtik-Aufbau auswählt und in eine maschinenlesbare Fertigungsanweisung umwandelt. Dies kann beispielsweise ein CAD-Modell für eine herzustellende Komponente sein oder eine Montageanweisung, insbesondere für den Roboter. Dadurch ist die Herstellung der Gasanalysevorrichtung weiter automatisierbar und infolgedessen beschleunigbar. Alternativ oder ergänzend kann das Computerprogrammprodukt dazu ausgebildet sein, eine Parametrierung von zumindest einem Pneumatikmodul, die dem ausgewählten Kandidaten-Pneumatik-Aufbau entspricht, an das Pneumatikmodul auszugeben.

Gleichermaßen wird die zugrundeliegende Aufgabenstellung durch eine erfindungsgemäße Gasanalysevorrichtung gelöst. Die Gasanalysevorrichtung umfasst zumindest eine Trennvorrichtung und eine Mehrzahl an Pneumatikmodulen, die miteinander verbunden sind. Erfindungsgemäß ist die Gasanalysevorrichtung gemäß einem der oben beschriebenen Verfahren hergestellt. Die Gasanalysevorrichtung ist dadurch in besonderer Weise an ihren vorgesehen Einsatzzweck angepasst und mit erhöhter Geschwindigkeit herstellbar. Hierdurch wird insgesamt eine gesteigerte Wirtschaftlichkeit der Gasanalysevorrichtung erzielt.

Des Weiteren wird die eingangs dargestellte Aufgabe durch ein erfindungsgemäßes Simulationsverfahren gelöst, das dazu ausgebildet ist, ein Betriebsverhalten einer Gasanalysevorrichtung zu simulieren. Das Simulationsverfahren umfasst einen ersten Schritt, in dem ein Datensatz bereitgestellt wird, mit dem die Funktionsweise der Gasanalysevorrichtung zumindest teilweise nachstellbar ist. Der Datensatz kann beispielsweise als ein Modell zumindest eines Abschnitts der Gasanalysevorrichtung ausgebildet sein. Insbesondere kann durch den Datensatz zumindest die Funktionsweise einer Trennvorrichtung der Gasanalysevorrichtung nachstellbar sein.

Weiter umfasst das Simulationsverfahren einen zweiten Schritt, in dem zumindest ein Betriebsparameter vorgegeben wird, durch den das zu simulierende Betriebsverhalten definiert ist. Der Betriebsparameter kann beispielsweise eine Zusammensetzung einer Stoffprobe umfassen, die der Gasanalysevorrichtung im zu simulierenden Betrieb zugeführt wird, deren Temperatur, Druck und/oder Strömungsgeschwindigkeit. Das Vorgeben des Betriebsparameters kann durch einen Benutzer erfolgen. Weiter umfasst das Simulationsverfahren einen dritten Schritt, in dem ein Leistungsparameter der Gasanalysevorrichtung anhand des Datensatzes gemäß dem ersten Schritt und des Betriebsparameters gemäß dem zweiten Schritt ermittelt wird. Das Ermitteln des Leistungsparameters erfolgt anhand eines Simulationsprogrammprodukts, das im dritten Schritt ausgeführt wird und dem der Datensatz und die mindestens eine Betriebsparameter als Eingabe zugeführt werden. Der Leistungsparameter kann beispielsweise ein Trennleistungsparameter der Trennvorrichtung sein oder eine Dauer zur Durchführung einer Analyse der Stoffprobe, also ihrer virtuellen Repräsentanz, die der simulierten Gasanalysevorrichtung zugeführt wird.

Darüber hinaus gehört ein vierter Schritt zum Simulationsverfahren, in dem der im dritten Schritt ermittelte Leistungsparameter an den Benutzer und/oder eine Datenschnittstelle ausgegeben. Die Datenschnittstelle kann dazu ausgebildet sein, neben dem Leistungsparameter auch den Datensatz und/oder den zumindest einen Betriebsparameter an eine anderes simulationsgerichtetes Computerprogramm und/oder einen Optimierungsalgorithmus auszugeben.

Beim erfindungsgemäßen Simulationsverfahren ist die simulierte Gasanalysevorrichtung, also ihre virtuelle Repräsentanz, gemäß einem Kandidaten-Pneumatik-Aufbau ausgebildet, der durch ein Herstellungsverfahren gemäß einer der oben skizzierten Ausführungsformen erstellt ist. Das erfindungsgemäße Simulationsverfahren ist dazu geeignet, einen Betrieb der Gasanalysevorrichtung, die nach dem bezeichneten Kandidaten-Pneumatik-Aufbau hergestellt ist, betriebsbegleitend zu überwachen. Insbesondere ist dadurch ein eingetretener oder bevorstehender Ausfall einer Komponente der Gasanalysevorrichtung in einfacher Weise erkennbar. Der Erfindung liegt unter anderem die Erkenntnis zugrunde, dass die mit dem zugrundeliegenden Herstellungsverfahren hergestellte Gasanalysevorrichtung selbst besonders simulationsfreundlich ist, und dadurch realitätstreu per Simulation überwachbar ist. [

Ferner wird die eingangs skizzierte Aufgabenstellung durch ein erfindungsgemäßes Simulationsprogrammprodukt gelöst, das dazu ausgebildet ist, ein Betriebsverhalten einer Gasanalysevorrichtung zu simulieren. Das Betriebsverhalten kann beispielsweise durch zumindest einen Leistungsparameter der Gasanalysevorrichtung bzw. ihrer virtuellen Repräsentanz beschrieben werden. Erfindungsgemäß ist das Simulationsprogrammprodukt dazu ausgebildet, ein Simulationsverfahren gemäß einer der oben skizzierten Ausführungsformen durchzuführen.

Das Simulationsprogrammprodukt kann ein Physik-Modul umfassen, das dazu ausgebildet ist, basierend auf einem Datensatz, in dem die Funktionsweise der Gasanalysevorrichtung zumindest teilweise nachstellbar ist, und einem Betriebsparameter einen vorgebbaren Leistungsparameter der Gasanalysevorrichtung bzw. ihrer virtuellen Repräsentanz zu ermitteln. Die virtuelle Repräsentanz der Gasanalysevorrichtung entspricht hierbei dem Datensatz, in dem deren Funktionswiese zumindest teilweise nachstellbar ist. Das Simulationsprogrammprodukt kann als Digitaler Zwilling der zugrundeliegenden Gasanalysevorrichtung oder zumindest ihrer Trennvorrichtung ausgebildet sein. Insbesondere kann das Simulationsprogrammprodukt als Digitaler Zwilling gemäß der Druckschrift US 2017/286572 A1 ausgebildet sein. Der Offenbarungsgehalt von US 2017/286572 A1 wird durch Verweisung in die vorliegende Anmeldung miteinbezogen. Alternativ oder ergänzend kann der Datensatz, der dem Simulationsprogrammprodukt zugrunde liegt, der ausgewählte Kandidaten-Pneumatik-Aufbau gemäß dem zugrundeliegenden Herstellungsverfahren ausgebildet sein.

Der Erfindung liegt unter anderem die Erkenntnis zugrunde, dass eine Gasanalysevorrichtung, die mittels des beanspruchten Herstellungsverfahrens hergestellt ist, besonders simulationsfreundlich ist und durch das Simulationsprogrammprodukt mit gesteigerter Realitätstreue nachstellbar ist. Das Simulationsprogrammprodukt kann dazu ausgebildet sein, einen Betrieb der Gasanalysevorrichtung zu überwachen, die mit dem beanspruchten Herstellungsverfahren hergestellt ist.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Ferner sind die einzelnen Merkmale der in den Figuren gezeigten Ausführungsformen auch untereinander und mit den oben skizzierten Merkmalen kombinierbar. Es zeigen im Einzelnen:
- FIG 1: einen schematischen Ablauf einer ersten Ausführungsform des beanspruchten Verfahrens in einem ersten Stadium;
- FIG 2: einen schematischen Ablauf der ersten Ausführungsform des beanspruchten Verfahrens in einem zweiten Stadium;
- FIG 3: einen schematischen Ablauf der ersten Ausführungsform des beanspruchten Verfahrens in einem dritten Stadium;
- FIG 4: einen schematischen Ablauf einer zweiten Ausführungsform des beanspruchten Verfahrens.

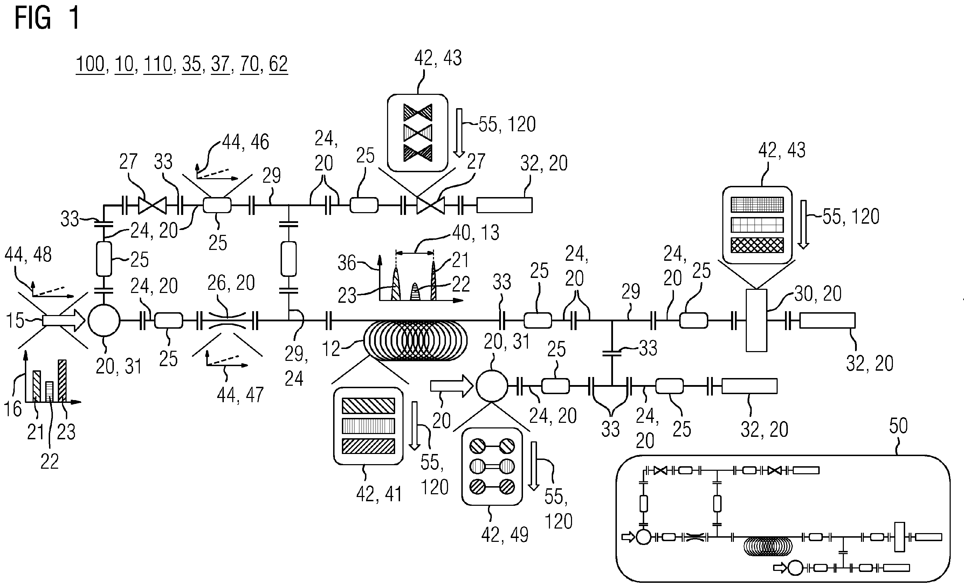

In FIG 1 ist schematisch eine erste Ausführungsform einer ersten Ausführungsform des beanspruchten Verfahrens 100 zum Herstellen einer Gasanalysevorrichtung 10 in einem ersten Stadium dargestellt. Die herzustellende Gasanalysevorrichtung 10 ist dazu vorgesehen, eine Zusammensetzung 16 einer zugeführten Stoffprobe 15 zu analysieren. Die herzustellende Gasanalysevorrichtung 10 basiert hierbei auf einem Basis-Pneumatik-Aufbau 35, der eine virtuelle Repräsentanz 37 der herzustellenden Gasanalysevorrichtung 10 ist, die auch virtuelle Repräsentanzen 37 ihrer Komponenten umfasst. Die folgenden Bezeichnungen der Komponenten beziehen sich damit analog auf ihre virtuellen Repräsentanzen 37.

Die herzustellende Gasanalysevorrichtung 10 umfasst als Komponenten zumindest eine Trennvorrichtung 12, die als Trennsäule ausgebildet ist, und eine Mehrzahl an Pneumatikmodulen 20. Die Pneumatikmodule 20 sind dazu ausgebildet, auf eine Fluidströmung, die die Stoffprobe 15 und/oder ein Trägergas 20 umfassen kann, einzuwirken. Im Einzelnen können die Pneumatikmodule 20 Leitungen 24, Drosseln 26, Ventile 27, Detektoren 30, Fluideinlässe 31 und/oder Fluidauslässe 32 umfassen. Die Trennvorrichtung 12 und die Pneumatikmodule 20 sind im Basis-Pneumatik-Aufbau 35 über Kupplungen 33 miteinander verbunden. Die Kupplungen 33 stellen Schnittstellen dar, so dass die Pneumatikmodule 20 im Basis-Pneumatik-Aufbau 35, also der virtuellen Repräsentanz 37, austauschbar sind. Insbesondere sind die Pneumatikmodule 20 an den Kupplungen 33 trennbar und durch Einsetzen anderer Pneumatikmodule 20 andere Basis-Pneumatik-Aufbauten 35 erzeugbar. Leitungen 24 sind jeweils in ihrem Aufbau 29 beschrieben, der die Verteilung des Fluids wiedergibt, und einen Leitungswiderstand 35 beschrieben. Durch den Aufbau 29 ist beispielsweise darstellbar, ob die Leitung 24 verzweigt oder unverzweigt ausgebildet ist. Der Leitungswiderstand 25 wiederum ist zumindest durch eine Angabe über die jeweilige Leitungslänge 46, ihren Innendurchmesser und/oder ihre Oberflächenrauigkeit an ihrer Innenwandung beschrieben.

Das Verfahren 100 geht von einen ersten Schritt 110 aus, in dem zumindest ein Zielparameter 62 vorgegeben wird, der als Leistungsparameter 40 der Trennvorrichtung 12 ausgebildet ist. Der Zielleistungsparameter 62 ist ein Trennleistungsparameter 13, der die Trennung von Stoffkomponenten 21, 22, 23 der Stoffprobe 15 in einem Chromatogramm 36 quantifiziert. Im Einzelnen ist der Trennleistungsparameter 13 gemäß FIG 1 ein Trennabstand zwischen der ersten Stoffkomponente 21 und der dritten Stoffkomponente 23. Alternativ oder ergänzend kann jegliche andere Größe, die eine Trennung zwischen der ersten, zweiten und dritten Stoffkomponente 21, 22, 23 durch die Trennvorrichtung 12 wiedergibt, als Trennleistungsparameter 13 dienen. Durch den Zielparameter 62 ist vorgegeben, in welcher Hinsicht die herzustellende Gasanalysevorrichtung 10 zu optimieren ist. Im ersten Schritt 110 wird eine Mehrzahl an Basis-Pneumatik-Aufbauten 35 wie in FIG 1 gezeigt, bereitgestellt. Die Basis-Pneumatik-Aufbauten 35 unterscheiden sind insoweit, dass sie unterschiedliche Pneumatikmodule 20 in unterschiedlicher Anordnung aufweisen. Neben den Basis-Pneumatik-Aufbauten 35 wird auch die zu analysierende Stoffprobe 15, insbesondere deren Zusammensetzung 16 mit der ersten, zweiten und dritten Komponente 21, 22, 23 vorgegeben.

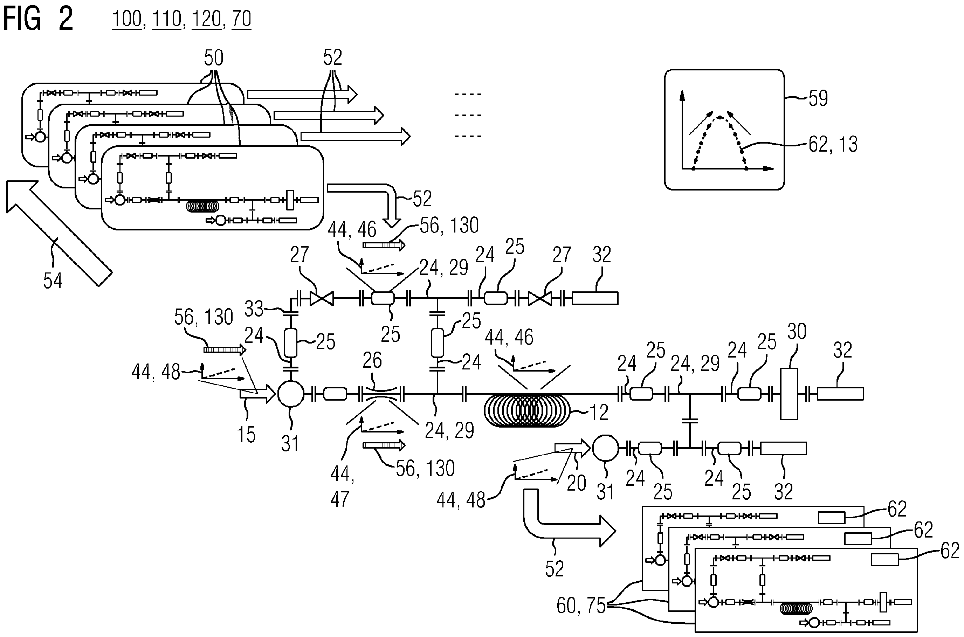

Des Weiteren umfasst das Verfahren 100 einen zweiten Schritt 120, in dem eine Mehrzahl an diskreten Parametern 42 und kontinuierlichen Parametern 44 der der Basis-Pneumatik-Aufbauten 35 bereitgestellt werden. Zu den diskreten Parametern 42 gehören unter anderem eine Typenangabe 43 für ein Ventil 27, eine Materialangabe 41 für ein Trennmaterial der Trennvorrichtung 12, insbesondere für ihre Innenbeschichtung und/oder Füllung, eine Stoffangabe 49 für das Trägergas 20 und eine Typenangabe 43 für den Detektor 30. Die diskreten Parameter 42 sind dazu ausgebildet, eine abzählbare Anzahl an Werten aufweisen zu können. Die kontinuierlichen Parameter 44 sind dazu ausgebildet, im Wesentlichen jeglichen Wert innerhalb eines vorgebbaren Intervalls annehmen zu können. Zu den kontinuierlichen Parametern 44 gehören unter anderem eine Leitungslänge 46 einer Leitung 24 und/oder der Trennvorrichtung 12, ein Einschnürungsverhältnis 47 einer Drossel 26, ein Förderdruck 48 der Stoffprobe 15 und/oder des Trägergases 20. Im zweiten Schritt 120 werden die diskreten Parameter 42 variiert und so eine Vielzahl an Grundkonfigurationen 50 für die herzustellende Gasanalysevorrichtung 10 erstellt. Das Variieren 50 ist in FIG 1 durch einen nach unten gerichteten Pfeil versinnbildlicht. Eine Grundkonfiguration 50 entspricht damit einem Basis-Pneumatik-Aufbau 35, der durch ein Vorgeben seiner diskreten Parameter 42 konkretisiert ist. Die kontinuierlichen Parameter 44 bleiben im zweiten Schritt 120 noch unbestimmt. Die im zweiten Schritt 120 erstellten Grundkonfigurationen 50 der herzustellenden Gasanalysevorrichtung 10 werden für ein anschließenden zweites Stadium bereitgestellt, das in FIG 2 näher gezeigt ist. Das in FIG 1 gezeigte erste Stadium wird anhand eines Computerprogrammprodukts 70 durchgeführt.

Ein zweites Stadium des beanspruchten Verfahrens 100 ist in FIG 2 schematisch dargestellt. Das zweite Stadium schließt sich an das erste Stadium an, das in FIG 1 exemplarisch gezeigt ist. FIG 2 geht somit davon aus, dass der erste und zweite Schritt 110, 120 des beanspruchten Verfahrens 100 bestimmungsgemäß durchgeführt sind. Im zweiten Stadium erfolgt ein dritter Schritt 130 des Verfahrens 100, in dem eine Mehrzahl von Kandidaten-Pneumatik-Aufbauten 60 erstellt werden. Die Grundkonfigurationen 50, die im zweiten Schritt 120 erstellt werden, werden jeweils durch eine Übergabe 52 an den dritten Schritt 130 weitergeleitet. Im dritten Schritt 130 wird eine Mehrzahl an kontinuierlichen Parametern 44 variiert. Das Variieren 56 der kontinuierlichen Parameter 44 erfolgt hierbei mittels eines Optimierungsalgorithmus 72. Zu den variierten kontinuierlichen Parametern 44 gehören unter anderen Leitungslängen 46 von Leitungen 24 und/oder der Trennvorrichtung 12, das Einschnürungsverhältnis 47 einer Drossel 26 und der Förderdruck 48 der Stoffprobe 15. Das Variieren 56 ist durch einen gestreiften Pfeil in FIG 2 versinnbildlicht. Durch Vorgeben von Werten für die kontinuierlichen Parameter 44 wird eine Grundkonfiguration 50 zu einem Kandidaten-Pneumatik-Aufbau 60. Ein Kandidaten-Pneumatik-Aufbau 60 entspricht somit einer konkretisierten Grundkonfiguration 50, in der jeder diskrete Parameter 42 und jeder kontinuierliche Parameter 44 einen Wert aufweist und die prinzipiell herstellbar ist. Durch den Optimierungsalgorithmus 72 werden die kontinuierlichen Parameter 44 dahingehend variiert, dass der vorgegebene Zielparameter 62, also ein Trennleistungsparameter 13 der Trennvorrichtung 12, sich einem Optimum nähert, beispielsweise einem Maximum. Um den Trennleistungsparameter 13 zu ermitteln, wird die Trennvorrichtung 12 und ihr Betrieb mittels einer Sliding-Window-Simulation nachgestellt. Der Wert des Zielparameters 62 wird für jede der erzeugten Kandidaten-Pneumatik-Aufbauten 60 ermittelt und in Verbindung mit diesen gespeichert. Die erzeugten Kandidaten-Pneumatik-Aufbauten 60 werden aus dem dritten Schritt 130 durch eine Übergabe 52 in einem Speicher zumindest vorübergehend gespeichert. Je Grundkonfiguration 50 wird so eine Mehrzahl an Kandidaten-Pneumatik-Aufbauten 60 im dritten Schritt ermittelt. Dazu werden die Grundkonfigurationen 50 in einer Schleife 54 abgearbeitet. Die Kandidaten-Pneumatik-Aufbauten 60 sind jeweils Datensätze, die eine herstellbaren Gasanalysevorrichtung 10 in ihrer Funktionsweise zumindest teilweise beschreiben. Eine entsprechend hergestellte Gasanalysevorrichtung 10 ist durch den entsprechenden Kandidaten-Pneumatik-Aufbau 60 in puncto Betriebsverhalten nachstellbar. Die Kandidaten-Pneumatik-Aufbauten 60 sind somit jeweils Digitale Zwillinge 75 einer zumindest herstellbaren Gasanalysevorrichtung 10. Das in FIG 2 gezeigt zweite Stadium erfolgt mittels eines Computerprogrammprodukts 70, das auch den Optimierungsalgorithmus 72 umfasst.

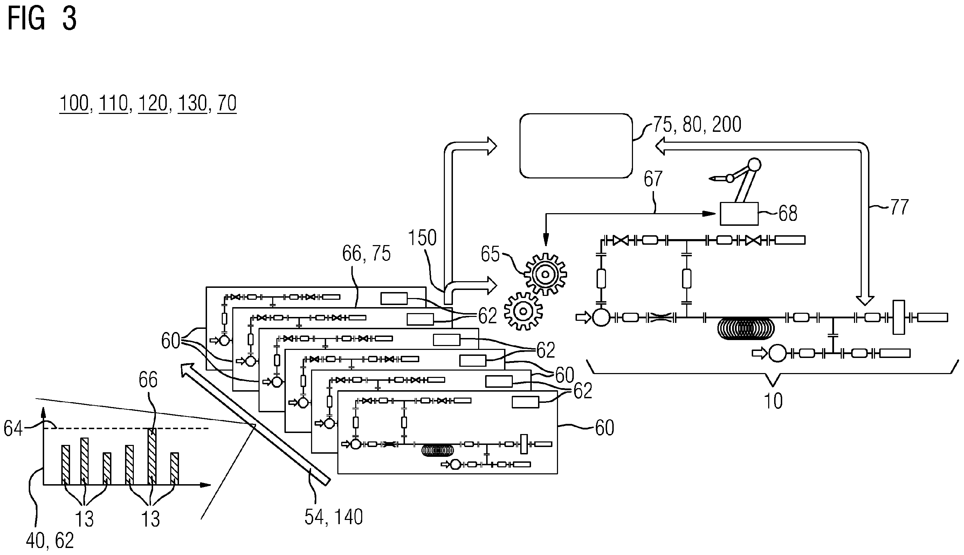

In FIG 3 ist ein drittes Stadium des beanspruchten Verfahrens 100 gezeigt, das sich an das zweite Stadium, wie in FIG 2 gezeigt, anschließt. Das dritte Stadium geht davon aus, dass der erste, zweite und dritte Schritt 110, 120, 130 des Verfahrens 100 bestimmungsgemäß durchgeführt sind. Im dritten Stadium wird ein vierter Schritt 140 durchgeführt, in dem die im dritten Schritt 130 erstellten Kandidaten-Pneumatik-Aufbauten 60 ausgewertet werden. Darin werden die in Verbindung mit den Kandidaten-Pneumatik-Aufbauten 60 gespeicherten Werte für den Zielparameter 62, als dem Trennleistungsparameter 13 als Leistungsparameter 40, miteinander verglichen. Dazu werden die Kandidaten-Pneumatik-Aufbauten 60 in einer Schleife 54 systematisch abgefragt. Anhand eines vorgebbaren Sollwerts 64 wird der Kandidaten-Pneumatik-Aufbau 60 ausgewählt, bei dem der Zielparameter 62 ein Maximum aufweist. Der so ausgewählte Kandidaten-Pneumatik-Aufbau 66 wird bereitgestellt und als Vorgabe genutzt, um basierend hierauf die Gasanalysevorrichtung 10 herzustellen. Zur Herstellung 65 des Gasanalysevorrichtung 10 wird in einem fünften Schritt 150 basierend auf dem ausgewählten Kandidaten-Pneumatik-Aufbau 66 zumindest ein Steuerbefehl 67 für eine Fertigungsvorrichtung 68 ermittelt und ausgegeben. Dies erfolgt über eine nicht näher dargestellte Datenschnittstelle. Die Fertigungsvorrichtung 67 ist hierbei als Roboter ausgebildet. Mit Durchführung der Herstellung 65 liegt die angestrebte Gasanalysevorrichtung 10 vor. Ebenso wird im fünften Schritt 150 der ausgewählte Kandidaten-Pneumatik-Aufbau 66 als Digitaler Zwilling 75 der basierend hierauf herzustellenden oder hergestellten Gasanalysevorrichtung 10 bereitgestellt. Die erfolgt ebenso über eine nicht näher gezeigte Datenschnittstelle. Der Digitaler Zwilling 75 gehört zu einem Simulationsprogrammprodukt 80, das dazu ausgebildet ist, ein Simulationsverfahren 200 durchzuführen. Mittels des Simulationsverfahrens 200 ist das Betriebsverhalten der hergestellten Gasanalysevorrichtung 10 überwachbar. Der Digitale Zwilling 75 ist zu einem Überwachen der Gasanalysevorrichtung 10 mit dieser über eine Rückkopplungsschnittstelle 77 verbunden. Über die Rückkopplungsschnittstelle 77 ist das vorliegende Betriebsverhalten der Gasanalysevorrichtung 10 mit dem vom Digitalen Zwilling 75 ermittelten Betriebsverhalten vergleichbar und somit auf Plausibilität prüfbar und/oder zu Diagnosezwecken analysierbar. Das in FIG 3 gezeigte dritte Stadium wird ebenso durch das beanspruchte Computerprogrammprodukt 70 durchgeführt.

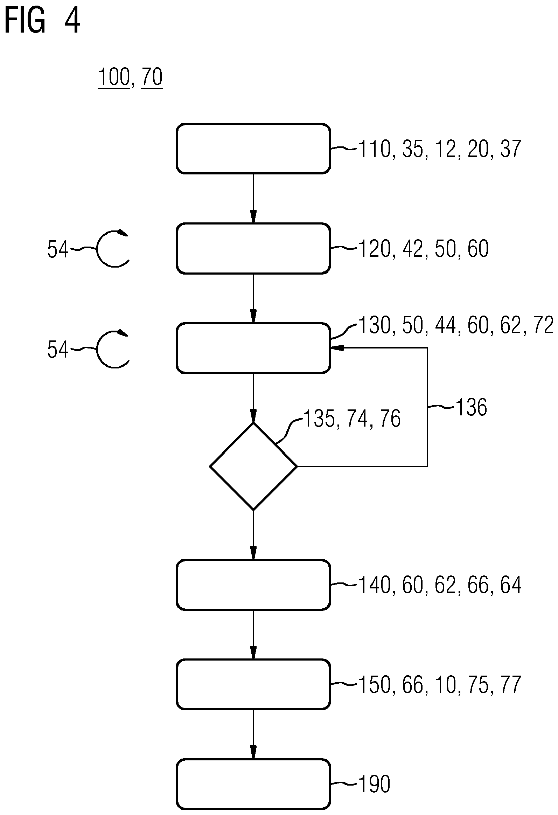

Eine zweite Ausführungsform des beanspruchten Verfahrens 100 ist schematisch in FIG 4 dargestellt. Das Verfahren 100 wird mittels eines beanspruchten Computerprogrammprodukts 70 durchgeführt und ist dazu ausgebildet, eine Gasanalysevorrichtung 10 herzustellen. In einem ersten Schritt 110 wird eine Mehrzahl an Basis-Pneumatik-Aufbauten 35 bereitgestellt, die virtuelle Repräsentanzen 37 ihrer Komponenten aufweisen. Zu diesen Komponenten gehört zumindest eine Trennvorrichtung 12 und eine Mehrzahl an Pneumatikmodulen 20. Ebenso wird ein Zielparameter 62 vorgegeben, auf den hin die herzustellende Gasanalysevorrichtung 10 zu optimieren ist. Auf den ersten Schritt 110 folgt ein zweiter Schritt 120, in dem diskrete Parameter 42 der jeweiligen Basis-Pneumatik-Aufbauten 35 variiert werden. Durch das Variieren 55 werden im zweiten Schritt 120 Grundkonfigurationen 60 erzeugt, die für den dritten Schritt 130 bereitgestellt werden. Das Ermitteln der Grundkonfigurationen 60 erfolgt in einer Schleife 54, so dass je Basis-Pneumatik-Aufbau 35 eine Mehrzahl an Grundkonfigurationen 50 erzeugt wird. Es folgt der dritte Schritt 130, in dem die Grundkonfigurationen 50 weiterverarbeitet werden. In einer Mehrzahl der Grundkonfigurationen 50 werden deren kontinuierliche Parameter 44 variiert. Das Variieren 56 der kontinuierlichen Parameter 44 erfolgt mittels eines Optimierungsalgorithmus 72, der zum Computerprogrammprodukt 70 gehört. Der Optimierungsalgorithmus 72 ist dazu ausgebildet, den Wert des Zielparameters 62 auf ein vorgebbares Ziel, beispielweise ein Maximum oder Minimum, hin zu optimieren. Eine Grundkonfiguration 50, in der die kontinuierlichen Parameter 44 mit einem Wert versehen sind, stellt einen Kandidaten-Pneumatik-Aufbau 60 dar. Im dritten Schritt 130 wird somit je Grundkonfiguration 50 eine Mehrzahl an Kandidaten-Pneumatik-Aufbauten 60 ermittelt und je Kandidaten-Pneumatik-Aufbau 60 der Wert des Zielparameters 62 ermittelt.

Auf den dritten Schritt 130 erfolgt eine Verzweigung 135 des beanspruchten Verfahrens 100. Darin wird für zumindest eine der ermittelten Kandidaten-Pneumatik-Aufbauten 60 mit zumindest einer Konstruktionsbedingung 74 und/oder einer Betriebsbedingung 76 der herzustellenden Gasanalysevorrichtung 10 verglichen. Wenn der zumindest eine Kandidaten-Pneumatik-Aufbau 60 die Konstruktionsbedingung 74 und/oder die Betriebsbedingung 76 verletzt, wird der entsprechende Kandidaten-Pneumatik-Aufbau 60 verworfen und das Verfahren 100 über eine Rückführung 136 zum dritten Schritt 130 zurückgeführt. Wenn der an der Verzweigung 135 geprüfte Kandidaten-Pneumatik-Aufbau 60 der Konstruktionsbedingung 74 und/oder der Betriebsbedingung 76 entspricht, wird dieser für den vierten Schritt 140 weitergeleitet.

Im vierten Schritt 140 wird eine Mehrzahl an Kandidaten-Pneumatik-Aufbauten 60 anhand eines vorgebbaren Sollwerts 64 geprüft. Dabei wird der Wert des Zielparameters 62 in den Kandidaten-Pneumatik-Aufbauten 60 mit einem Sollwert 64 verglichen. Basierend hierauf wird ein Kandidaten-Pneumatik-Aufbau 60 ausgewählt. Der so ausgewählte Kandidaten-Pneumatik-Aufbau 66 wird im Folgenden an einen fünften Verfahrensschritt 150 übergeben.

Im fünften Schritt 150 wird die Gasanalysevorrichtung 10 gemäß dem ausgewählten Kandidaten-Pneumatik-Aufbau 62 hergestellt. Ebenso wird der ausgewählte Kandidaten-Pneumatik-Aufbau 66 als Digitaler Zwilling 75 bereitgestellt, mit dem die herzustellende oder hergestellte Gasanalysevorrichtung 10 überwachbar ist. Der Digitale Zwilling 75 wird hierzu über eine Rückkopplungsschnittstelle 77 mit der Gasanalysevorrichtung 10 verbunden. Das beanspruchte Verfahren 100 ist dadurch abgeschlossen und erreicht seinen Endzustand 190.

## Patentansprüche

1. Verfahren (100) zum Herstellen einer Gasanalysevorrichtung (10), die zumindest eine Trennvorrichtung (12) und eine Mehrzahl an Pneumatikmodulen (20) aufweist, umfassend die Schritte:
a) Vorgeben zumindest eines Zielparameters (62) für die herzustellende Gasanalysevorrichtung (10) und Bereitstellen einer Mehrzahl an Basis-Pneumatik-Aufbauten (35), die jeweils virtuelle Repräsentanzen (37) der Trennvorrichtung (12) und der Pneumatikmodule (20) umfassen;
b) Bereitstellen einer Mehrzahl an kontinuierlichen und diskreten Parametern (42, 44) der Basis-Pneumatik-Aufbauten (35) und Erzeugen von Grundkonfigurationen (50) anhand der Basis-Pneumatik-Aufbauten (35), die unter Variieren (55) der diskreten Parameter (42) ermittelt werden;
c) Ermitteln von Kandidaten-Pneumatik-Aufbauten (60) anhand je einer Grundkonfiguration (50), wobei jeweils zumindest ein kontinuierlicher Parameter (44) der Grundkonfiguration (50) mittels eines Optimierungsalgorithmus (72) variiert wird;
d) Auswählen eines Kandidaten-Pneumatik-Aufbaus (60) anhand eines Sollwerts (64) des Zielparameters (62) und Ausgeben des ausgewählten Kandidaten-Pneumatik-Aufbaus (66) an einen Benutzer und/oder eine Datenschnittstelle;
wobei die Gasanalysevorrichtung (10) anhand des ausgewählten Kandidaten-Pneumatik-Aufbaus (66) hergestellt wird.

2. Verfahren (100) nach Anspruch 1, **dadurch gekennzeichnet, dass** eine virtuelle Repräsentanz (37) einer Stoffprobe (15) in der Trennvorrichtung (12) zumindest im Schritt c) in einer Sliding-Window-Simulation nachgestellt wird.

3. Verfahren (100) nach Anspruch 1 oder 2, **dadurch gekennzeichnet, dass** die diskreten Parameter (42) eine Typenangabe (43) für einen Detektor (30), Materialangabe (41) für ein Trennmaterial, ein Trägergas und/oder eine Typenangabe (43) für einen Injektor umfassen.

4. Verfahren (100) nach einem der Ansprüche 1 bis 3, **dadurch gekennzeichnet, dass** die kontinuierlichen Parameter (44) eine Temperatur der Stoffprobe (15), einen Förderdruck (48), eine Leitungslänge (46) der Trennvorrichtung (12), einen Trennvorrichtungsdurchmesser, einen pneumatischen Widerstand der Trennvorrichtung (12), einen pneumatischen Widerstand der Leitung (24) und/oder ein Einschnürungsverhältnis (47) umfassen.

5. Verfahren (100) nach einem der Ansprüche 1 bis 4, **dadurch gekennzeichnet, dass** der zumindest eine Zielparameter (62) auf zumindest eine Stoffprobe (15) mit einer vorgegebenen Zusammensetzung (16) bezogen ist, die mit der herzustellenden Gasanalysevorrichtung (10) zu analysieren ist.

6. Verfahren (100) nach einem der Ansprüche 1 bis 5, **dadurch gekennzeichnet, dass** die Schritte b) und/oder c) unter Berücksichtigung einer vorgebbaren Betriebsbedingung (76) und/oder einer Konstruktionsbedingung (74) durchgeführt werden, die durch den korrespondierenden Basis-Pneumatik-Aufbau (35) vorgegeben ist.

7. Verfahren (100) nach Anspruch 6, **dadurch gekennzeichnet, dass** der Schritt c) für eine Grundkonfiguration (50) abgebrochen wird, wenn die vorgebbare Betriebsbedingung (76) oder die Konstruktionsbedingung (74) durch einen Kandidaten-Pneumatik-Aufbau (60) verletzt wird.

8. Verfahren (100) nach einem der Ansprüche 1 bis 7, **dadurch gekennzeichnet, dass** der Zielparameter (62) ein Trennleistungsparameter (13) der Trennvorrichtung (12) ist.

9. Verfahren (100) nach einem der Ansprüche 1 bis 8, **dadurch gekennzeichnet** der in Schritt d) ausgewählte Kandidaten-Pneumatik-Aufbau (66) als Grundlage für einen Basis-Pneumatik-Aufbau (35) für eine erneute Durchführung des Verfahrens (100) in einer Datenbank gespeichert wird.

10. Verfahren (100) nach einem der Ansprüche 1 bis 9, **dadurch gekennzeichnet, dass** zumindest der Schritt c) mittels einer Künstlichen Intelligenz durchgeführt wird, die durch ein unbeaufsichtigtes maschinelles Lernen trainiert ist.

11. Computerprogrammprodukt (70) zum Ermitteln und Auswählen eines Kandidaten-Pneumatik-Aufbaus (66) zur Herstellung einer Gasanalysevorrichtung (10), das dazu ausgebildet ist, aus Basis-Pneumatik-Aufbauten (35) unter Berücksichtigung zumindest eines Zielparameters (62) Kandidaten-Pneumatik-Aufbauten (60) zu ermitteln, **dadurch gekennzeichnet, dass** das Computerprogrammprodukt (70) dazu ausgebildet ist, ein Verfahren (100) nach einem der Ansprüche 1 bis 10 zumindest teilweise umzusetzen.

12. Computerprogrammprodukt (70) nach Anspruch 11, **dadurch gekennzeichnet, dass** das Computerprogrammprodukt (70) dazu ausgebildet ist, basierend auf dem ausgewählten Kandidaten-Pneumatik-Aufbau (66) einen Steuerbefehl (67) für zumindest eine Fertigungsvorrichtung (68) auszugeben und/oder basierend auf dem ausgewählten Kandidaten-Pneumatik-Aufbau (66) eine Parametrierung für zumindest ein Pneumatikmodul (20) auszugeben.

13. Gasanalysevorrichtung (10), umfassend zumindest eine Trennvorrichtung (12) und eine Mehrzahl an Pneumatikmodulen (20), **dadurch gekennzeichnet, dass** die Gasanalysevorrichtung (10) durch ein Verfahren (100) nach einem der Ansprüche 1 bis 10 hergestellt ist.

14. Simulationsverfahren (200) zum Simulieren eines Betriebsverhaltens einer Gasanalysevorrichtung (10), umfassend die Schritte:
a) Bereitstellen eines Datensatzes, mit dem die Funktionsweise der Gasanalysevorrichtung (10) zumindest teilweise nachstellbar ist;
b) Vorgeben zumindest eines Betriebsparameters, durch den das zu simulierende Betriebsverhalten definiert ist;
c) Ermitteln eines Leistungsparameters (40) der Gasanalysevorrichtung (10) anhand des Datensatzes und des Betriebsparameters mittels eines Simulationsprogrammprodukts (80);
d) Ausgeben des Leistungsparameters (40) an einen Benutzer und/oder eine Datenschnittstelle;
**dadurch gekennzeichnet, dass** die Gasanalysevorrichtung (10) gemäß einem Kandidaten-Pneumatik-Aufbau (60, 66) ausgebildet ist, der durch ein Verfahren (100) nach einem der Ansprüche 1 bis 10 erstellt ist.

15. Simulationsprogrammprodukt (80) zum Simulieren eines Betriebsverhaltens einer Gasanalysevorrichtung (10), **dadurch gekennzeichnet, dass** das Simulationsprogrammprodukt (80) dazu ausgebildet ist, ein Simulationsverfahren (200) nach Anspruch 14 durchzuführen.
